# EUROPEAN PATENT SPECIFICATION

(11) **EP 4 158 106 B1**
(45) Date of publication and mention of the grant of the patent: **05.11.2025**
(21) Application number: 21814199.2
(22) Date of filing: 31.05.2021
(51) Int. Cl.: F03D 9/46, F03D 13/25, E01D 15/14, E01D 18/00, B63B 35/44

(54) **ENERGY BRIDGE**
ENERGIEBRÜCKE
PONT ÉNERGÉTIQUE

(30) Priority: 29.05.2020 NO 20200640
(43) Date of publication of application: 05.04.2023
(73) Proprietor: 7Waves AS, 1555 Son (NO)
(72) Inventor: RIIS, John, 1539 Moss (NO)
(74) Representative: Bryn Aarflot AS
(86) International application number: PCT/NO2021/050139
(87) International publication number: WO 2021/242119

(56) References cited:
- WO-A1-2007/009464
- WO-A1-2013/084979
- WO-A2-2010/080043
- CN-A- 1 563 587
- CN-A- 1 563 587
- NO-B1- 323 934

## Description

### Technical Field

The present invention relates to renewable energy and bridge structures. More specifically, the invention provides a floating energy bridge with integrated windmill structures. The combined structure, a bridge with integrated windmills, is termed an energy bridge. The energy bridge of the invention provides reduced cost for floating windmills and bridges for crossing for example fjords or straits, making projects more economically viable. In addition, further embodiments of the invention are energy islands offshore, comprising many of the features of the energy bridge of the invention.

### Background Art

The shift towards green energy can be vital. One of the main contributors can be increased utilization of floating windmills. However, floating windmills are still not economically viable per se compared to windmills on land, or several other sources of energy. Technology improving the economic viability of floating windmills as a source for green energy would be welcome and meet an urgent demand.

In addition, in many areas a demand exists for roads crossing of fjords or other bodies of water. Reducing the cost for such road crossings would also meet an urgent demand.

Relevant art has been identified as patent publications WO 200700946A1, WO 2015120227A1, NO 338758B1, CN 1563587 A and WO 2013/084979 A1.

### Summary of invention

The invention meets the demands by providing an Energy Bridge according to claim 1.

Preferably, more than 50% of the volume of the buoyancy structures are submerged below a waterline of the body of water where the energy bridge floats, and
wherein the energy bridge preferably comprises connectable elements, with connecting structure in either element end, and/or preferably the road structure comprises road structure elements with connecting structure in either end.

Preferably, the road structure has width of at least 3 m (meter), such as 4 m, if one driving lane, or at least 6 m, such as 7 m, with two driving lanes for traffic in opposite directions. Road pockets or small parking areas are preferably included, for allowing crossing if narrow road structure, and/or for providing working positions for crawlers, utility/maintenance vehicles, cranes, and/or for providing structural strength, and/or lateral support for windmill structures. Preferably, for many embodiments, the road structure comprises a truss structure below the road surface, allowing elements of road structure to be prefabricated and connected on the energy bridge. A road structure as defined is essential for reducing the cost of the energy bridge, since installation, repair and maintenance become simpler, in addition to providing functionality as a bridge.

For energy bridge embodiments crossing fjords, straits or other bodies of water, the road structure is preferably dimensioned for traffic by a vehicles such as cars, buses and trucks, but also a "crawler", for maintenance and installation of the windmill and parts thereof. This feature reduces the cost for installation, maintenance and replacement of windmills and components thereof to a level below or equal to the cost for installation, maintenance and replacement of windmills and components thereof on land. The major cost drawback for floating windmills is thereby eliminated or reversed to a cost advantage. Prefabricated energy bridge elements, towed from the yard and connected at the yard or on site, is estimated to reduce the cost of installation compared to windmills on land. The technical and economic effect is that both bridge projects and windmill projects can become economically viable. The additional functionality of bridge and/or windmills come at significantly reduced investment cost. Cost estimates indicate that by selling the electric energy produced by the windmills, all investment and maintenance cost can be paid for during a period of time of 20 years. This means that a bridge crossing can come for free, if calculated over at least 20 years, and over time provide income to a local community.

Preferably, the buoyancy structures are U- or J-shaped as seen along the road structure, and arranged partly submerged under the road structure with the road structure coupled directly to at least one of the vertical legs or parts of said U- or J-shaped buoyancy structures, wherein the full weight of the road structure is supported by at least one of said vertical legs or parts of said U- or J-shaped buoyancy structures; wherein the windmill tower structures are coupled directly to the submerged horizontal part of the U- or J- shaped buoyancy structures, wherein the full weight of the windmill tower structures are supported by said submerged horizontal part of the U- or J- shaped buoyancy structures; and the road structure preferably support the windmill tower structures laterally above the waterline of the body of water where the energy bridge floats.

Preferably, at least 90% or 100% of the volume of horizontally oriented buoyancy structure parts or components are below the waterline. Preferably, the vertical parts of the U- or J-shaped buoyancy elements are the only parts of said buoyancy structures extending above the waterline, thereby limiting a waterline area. The effect of this feature is surprising, with respect to reduced wave induced dynamic motion and thereby reduced stress and strain of the structure.

In a preferable embodiment, U- or J-shaped buoyancy elements are arranged along the energy bridge, one element every 50 - 250 m or 100-200 m, typically. The submerged horizontal part of said buoyancy elements are preferably arranged perpendicular to the road structure of the energy bridge. For a 5000 m long energy bridge, for example 50 or 48 buoyancy elements are included, arranged 100 m apart. The exact distance between such buoyancy elements depend on several factors, including the design of other structural elements of the energy bridge and practical size and weight limitations for transport and installation, and can be found by calculations following good engineering practice.

In another preferable embodiment of U-shaped or J-shaped buoyancy structures, the buoyancy structure is a truss structure, preferably one continuous truss structure for each connectable energy bridge element. More specifically, the truss structure buoyancy elements are U shaped or J-shaped if seen including cross-sectioned parts and part not cross-sectioned. Part of the U or J is in cross-section, the rest of the U or J is in the plane further away from the cross section, as seen along the energy bridge. In this embodiment, the buoyancy elements are truss structure, preferably with road structure supported on vertical legs on one side of the energy bridge and the windmills supported by vertical legs on the opposite side of the energy bridge. In other preferable embodiments, comprising three rows of vertical legs of the buoyancy structure, windmills are arranged on the central row, with one road structure on either side. In further preferable embodiments, comprising two rows of vertical legs of the buoyancy structure, preferably U-shaped as seen in cross section along the energy bridge, windmills are arranged on and supported by the horizontal buoyancy part between the vertical legs, with one road structure on either side along the energy bridge. The energy bridge preferably comprises connectable elements, comprising connecting structure (not illustrated), preferably allowing some flexibility for reduced maximum stress level. Alternatively, the energy bridge is one single structure, which can be preferable for short energy bridges.

In a further preferable embodiment, the buoyancy structure comprises longitudinal tubular elements, pontoons or pipe sections, such as riser sections cut into energy bridge element lengths and sealed and used as major buoyancy components, wherein at least two riser sections are included, one in either length side of the energy bridge, with a truss structure or a grating arranged between and over the riser structures, and preferably a road structure on top, preferably prefabricated. Preferably, the truss structure is between and/or over the tubular elements, extending above the waterline, and preferably additional truss structure extend below the waterline for at least the elements supporting a windmill structure, wherein the truss structure preferably is extending further down from the waterline in positions where windmill structures are supported by said truss structure and/or is dimensioned for higher loads than truss structure not supporting a windmill structure. Preferably, further buoyancy structure is included in energy bridge elements supporting a windmill structure. In a preferable embodiment, windmill structures are supported at intervals along a centerline of a tubular element based buoyancy structure, with one road structure on either side, for example for opposite driving directions, and preferably with additional road structure surface for crawlers or other large equipment at each windmill. Preferably, a plurality such as 2, 5, 7 or 15 longitudinal parallel buoyancy structures are included in each element. Preferably, the truss structure above the buoyancy elements elevates the road structure to at least 1 m above the water level, preferable at least 3, 5 or 8 m above the water level.

Preferably, the energy bridge is further comprising an AC-AC-or AC-DC-converter at one of the ends, preferably as part of a base station where equipment for power conversion, maintenance and installation is located. This feature can also contribute to reduced cost.

Preferably, the energy bridge is the whole crossing or a part of a crossing of a body of water for cars and utility vehicles.

Preferably, the energy bridge is further comprising floating or elevated solar panels, and/or wave dampeners and/or suspended retrievable tidal current turbines, for enhanced functionality and improved economy.

Preferably, the anchoring structure or connection in one or preferably both ends of the energy bridge is one or more of: a land structure, an anchoring structure extending down to a seabed, and a connection to a bridge allowing ships to cross under.

In one embodiment, the energy bridge of the invention is a structure out at sea, preferably a so-called energy island located offshore. In one embodiment, the energy island of the invention is located near shore and is coupled to land by an energy bridge of the invention of one of the embodiments as described above. In other embodiments, the energy island is autonomously located offshore, in fixed position with respect to orientation on the surface of the sea, or weather-vaning freely or within specific limits. The energy island is one of rectangular, quadratic, triangular, circular, elliptical or polygonal as viewed from above. In one embodiment, the energy island is anchored in at least one end or corner and is weather-vaning around the anchoring, wherein such single anchoring structure preferably include a turret structure or a swivel. More preferably, the energy island is anchored at least in each corner or end or in at least three directions 120 ° apart, providing a fixed or in substance fixed orientation on the sea. Preferably, road structure as described for the energy bridge embodiments described above are arranged between windmills and areas or locations of particular interest and/or around the energy island. Most preferably, the energy island comprises numerous road structure elements or modules arranged together for providing larger areas for energy and/or utility purposes and/or farmland and/or building foundation. Preferably, the energy island comprises J-shaped buoyancy elements of the type described above, arranged together tightly with the higher vertical leg facing outwards to the sea around the circumference of the energy island or with splash walls in between, for protecting against splashing and high waves. Preferably, each module on the energy island can be lifted and handled by a crawler or other vehicle or equipment that can be stationed on the energy island or can be transported between energy islands or each module can be lifted and handled by a lifting ship. The energy island of the invention is preferably used for energy production, by windmills, water cooled floating or elevated solar panels, retrievable tidal current and/or retrievable ocean current turbines arranged or integrated on the energy island and/or the energy island is a hub to which such surrounding energy producing installations are coupled; and/or agriculture; and/or accommodation and/or additional land in areas of land sinking.

In some preferable embodiments of the energy bridge and the energy island, the road structures are modules or elements comprising hollow buoyant sealed tubular sections, a truss structure, and the flat road surface, as seen from bottom to top in operative orientation. Preferably, said road structure modules are self-buoyant, with the road structure at elevation at least 1 m, for example 3m, 5m or 9 m above sea surface level when floating. Preferably, structure for coupling together road structure elements in longitudinal and/or lateral directions are included. In some embodiments, the rod structure elements are small enough to be transported on road, for example 3 m wide and 12 m long. In some embodiments, the road structure modules are designed for towing at sea and are for example 100 m long. The road structure modules of an energy island of the invention do not necessarily include a road structure for driving but can in many embodiments comprise similar flat area for other purposes, as indicated above, in this context still termed a road structure.

The windmills can in principle be any feasible windmill structure for the actual energy bridge, with horizontal rotation axis or vertical rotation axis. Embodiments with vertical rotation axis may have an advantage by reduced momentum on the energy bridge and allow arranging further windmill structures per area or length of energy bridge. A further advantage with windmills with vertical rotation axis is that there is no "wind shadow", meaning that no weathervaneing against the eye of the wind is required, thereby no rim gear in a nacelle is required, thereby saving weight above the waterline. Horizontal rotation axis windmills are however available from further vendors.

In the context of the energy bridge of the invention, U-shaped means a general U-shaped structure, with two vertical legs and one horizontal leg in between the lower ends of the vertical legs. J-shaped means that the vertical legs are not equal in length or elevation. The terms U-shaped or J-shaped includes structure in cross section as seen along the energy bridge and for some embodiments also structure seen behind a cross section of the energy bridge or an element of the energy bridge, providing a shape as described.

In the context of the present invention, vertical and horizontal has their normal meaning and refers to orientation at no external forces, i.e. sea state wind and current at state 0, preferably with orientation within a limit such as ±5°, ±2° or ±1° from nominal orientation.

Water level or water line refers to the water line or level at no external forces, i.e. sea state 0, with the energy bridge floating on the water.

In a preferable embodiment, the energy bridge is arranged to take the shape of a curve, as seen from above. This improves stability and allows higher momentum on the windmill structures. Most preferably, the elements comprise a connecting structure allowing a few degrees flexibility in angle between neighboring elements, such as ±3°, ±2° or ±1° variation in angle from a nominal angle at load condition 0. Said flexibility helps to reduce extreme local loads in the structure, thereby increasing service life.

### Brief description of drawings

Several preferable embodiments of an energy bridge of the present invention are illustrated, of which:
Figure 1 illustrates an embodiment with U-shaped buoyancy elements.
Figure 2 illustrates an embodiment with framework buoyancy elements, U- or J-shaped if seen including cross-sectioned parts and part not cross-sectioned.
Figure 3 illustrates an embodiment with buoyancy structure comprising longitudinal pontoons or pipe sections.
Figure 4 illustrates how an embodiment of the energy bridge of the invention takes a U-shape as floating on the water, as seen from above.

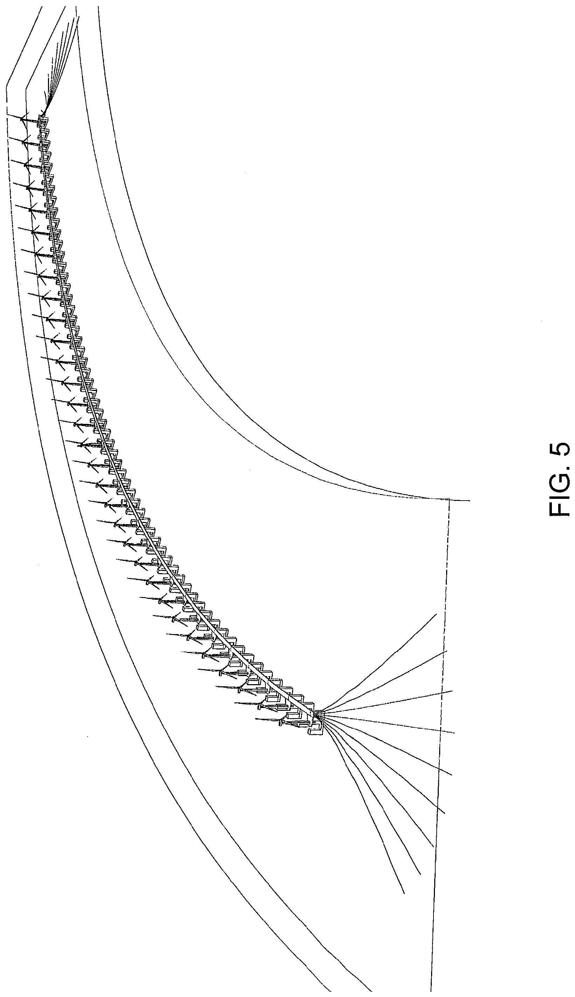

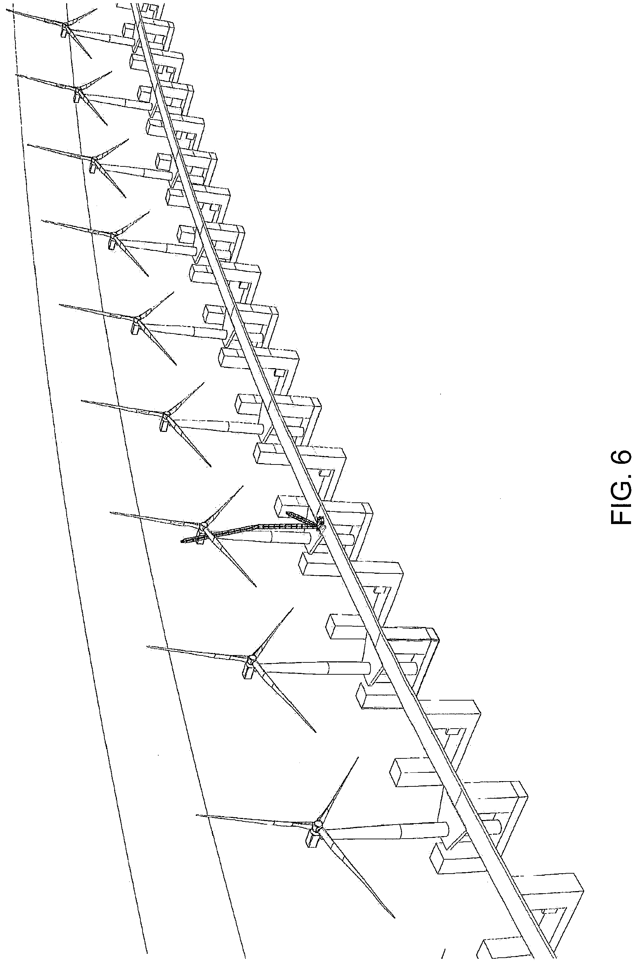

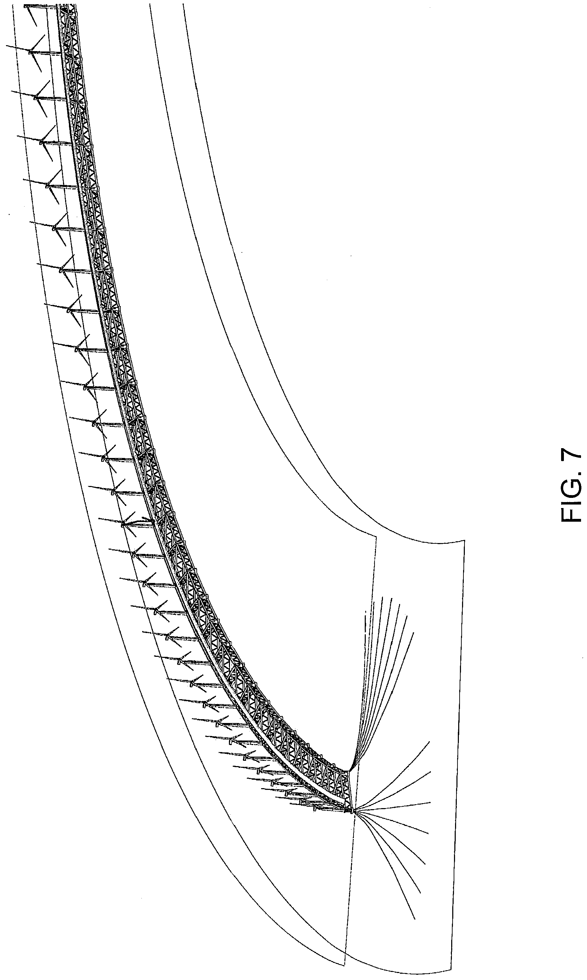

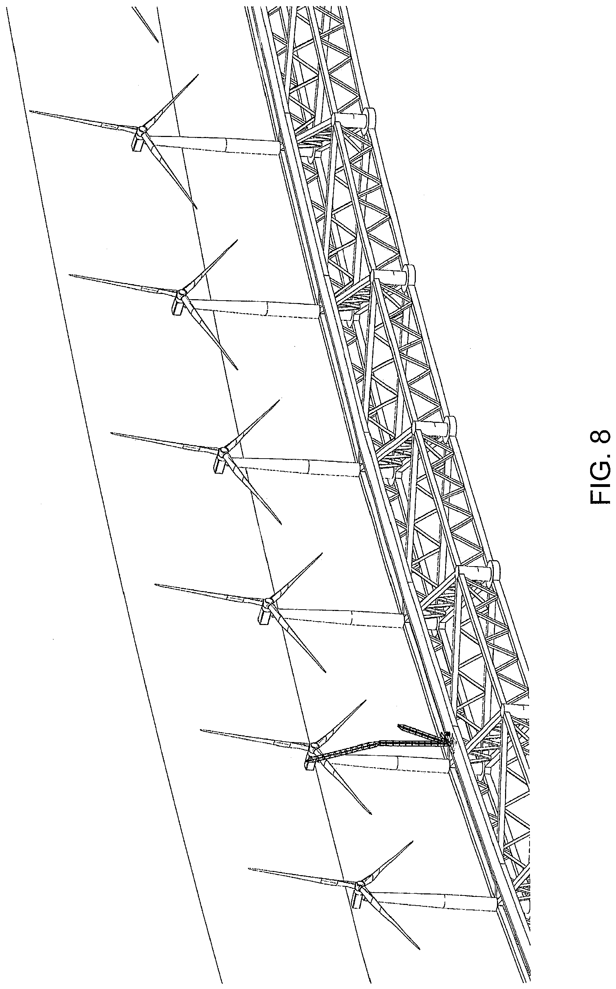

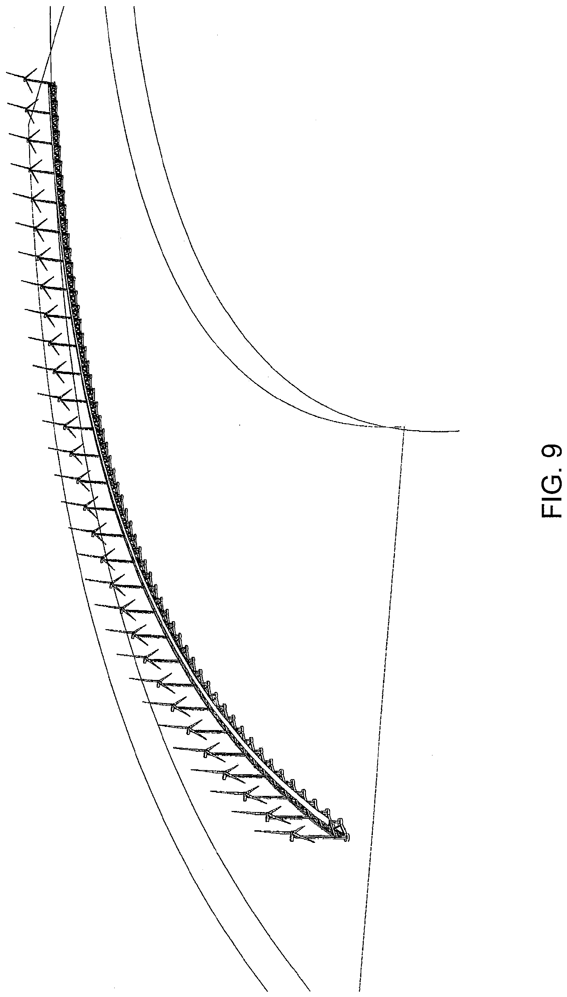

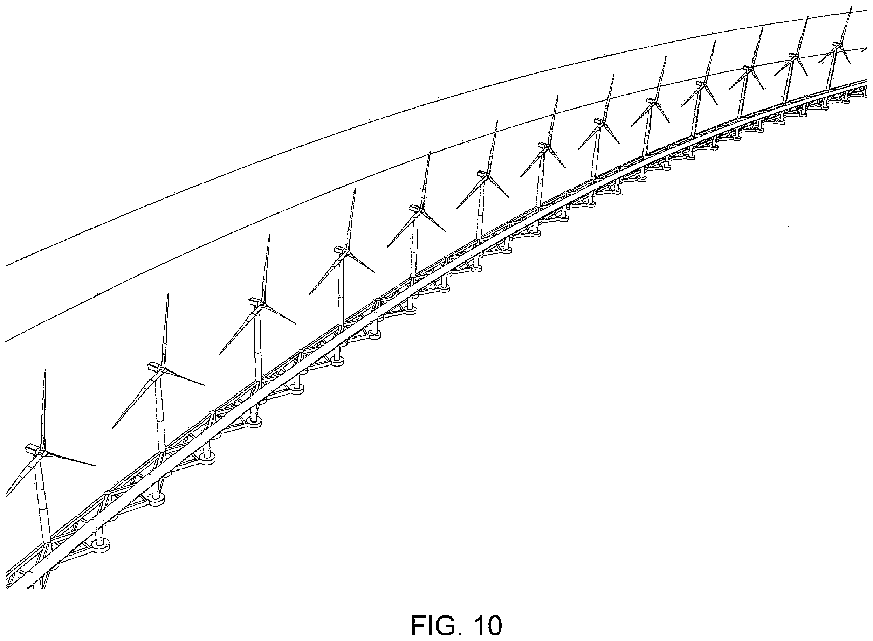

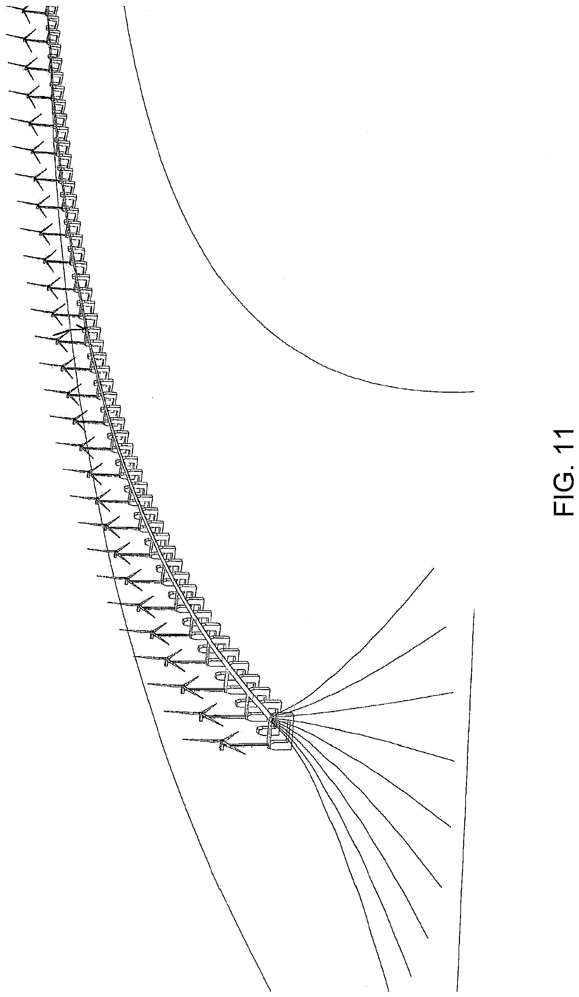

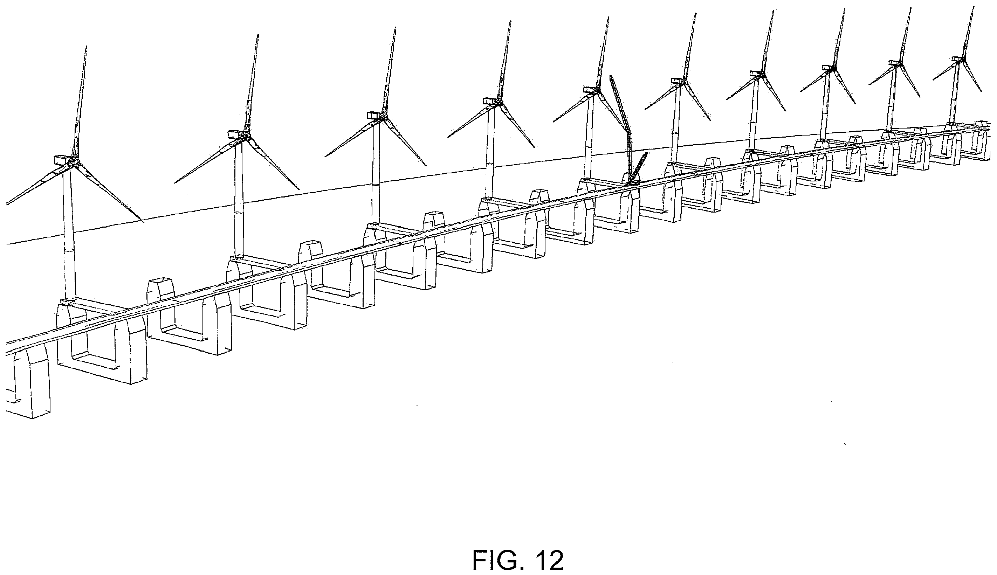

Figures 5-12 illustrate embodiments of an energy bridge of the invention.

### Detailed description of the invention

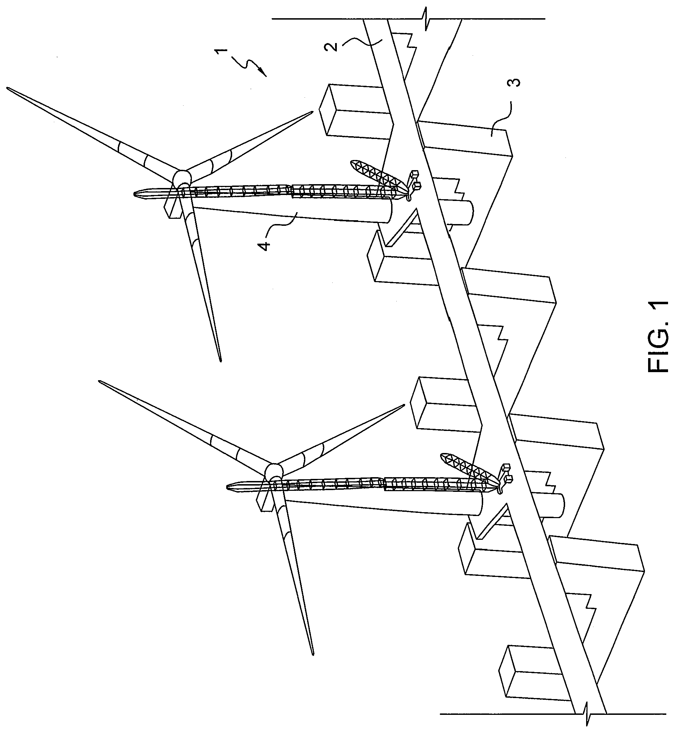

Reference is made to Fig. 1, illustrating an embodiment with U-shaped buoyancy elements. The energy bridge 1 comprises a road structure 2, buoyancy structures 3, windmill structures 4, and one anchoring structure or connection in either end of the energy bridge (not illustrated).

The energy bridge further comprises connectable elements (not illustrated), with connecting structure in either element end (not illustrated). The road structure 2 between the anchoring ends is supported by the buoyancy structures 3 or truss structure (not illustrated) coupled to the buoyancy structures. More than 50% of the volume of the buoyancy structures are submerged below a waterline of the body of water where the energy bridge floats, as indicated with a different color or hatching on top, above the waterline, of the vertical parts of the buoyancy structures. The vertical parts of the U-shaped buoyancy elements are the only parts of said buoyancy elements extending above the waterline, thereby limiting a waterline area, thereby providing increased stability and reduced loads on the structural elements. The horizontal part of the buoyancy structures, perpendicular oriented to the road structure, are fully submerged. One of the vertical legs support the road structure. The full weight of the windmill tower structures 4 are supported by the submerged horizontal part of the U- shaped buoyancy structures, and the road structure support the windmill tower structures laterally above the waterline of the body of water where the energy bridge floats, thereby reducing the momentum of the windmill tower. A crawler is also illustrated.

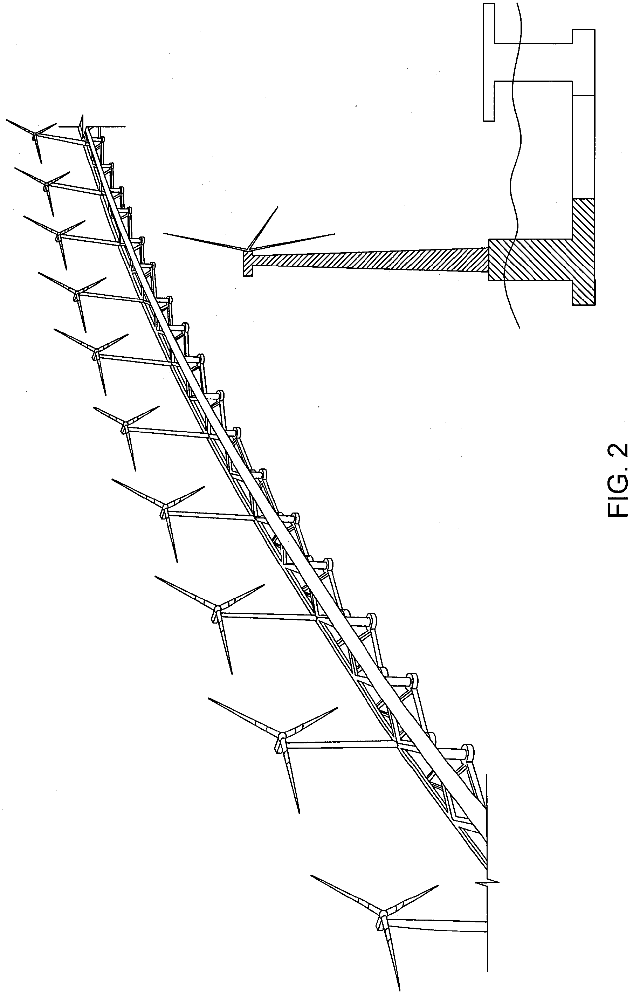

Figure 2 illustrates an embodiment with truss structure buoyancy elements, U shaped if seen including cross-sectioned parts and part not cross-sectioned. The U-shape of the energy bridge 1 illustrated in Figure 2 is indicated by a section detail out of scale. Part of the section detail is in cross-section, the rest of the U is in the plane further away from the cross section. In this embodiment, the buoyancy elements are truss structure, with road structure supported on vertical legs on one side of the energy bridge and the windmills supported by vertical legs on the opposite side. The energy bridge preferably comprises connectable elements, comprising connecting structure (not illustrated), preferably comprising some flexibility. Alternatively, the energy bridge is one single structure.

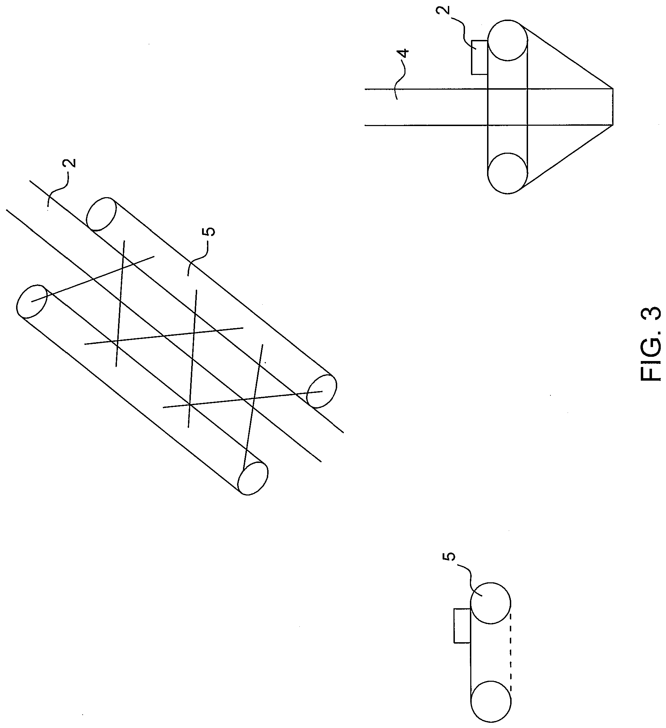

Reference is made to Figure 3, illustrating an embodiment with buoyancy structure comprising longitudinal pontoons or pipe sections, in the illustrated embodiment in the form of riser sections cut into element lengths and sealed and used as major buoyancy components. At least two riser sections are included, one in either side of the energy bridge. In some embodiments, more than two riser sections are included, such as three, four, five or six. For energy bridge elements supporting a windmill, more riser sections are preferably included than for elements not supporting a windmill, such as 3, 4 or 5 compared to 2 riser sections. On top of the riser structures, a truss structure or a grating is arranged between and over the riser structures. For some or all of the energy bridge elements, a truss structure or grating is also included below the riser structures, preferably a hollow pipe truss structure providing buoyancy in addition to supporting a windmill.

For all embodiments, connecting structure between elements are preferably included. A three-point connecting structure is an example of a feasible connecting structure, with one central connector hole and matching vertical pin in center, with one further connector on either side with a rubber bushing in a slightly larger hole or a rubber sleeve on a slightly smaller diameter pin , allowing flexibility about a nominal connection angle. Preferably, also the road structure elements comprise such connecting structure, below the actual road surface, which road surface are arranged with slightly overlap.

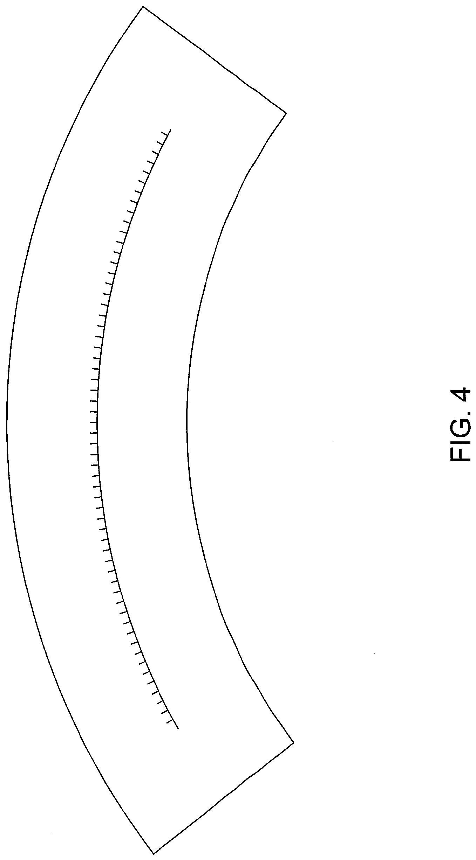

Figure 4 clearly illustrates how the energy bridge of the invention takes a U-shape as floating on the water, as seen from above.

The weight of steel for the energy bridge is estimated to be about 150 - 200 metric tons per MW produced electricity, which is about normal for break even with respect to investment cost. However, the cost for installation, operation and maintenance is much lower than typical for floating windmills, probably below similar cost for windmills on land. With respect to bridge cost, the income of the electricity produced by the energy bridge over 20 or 30 years may allow payment of all cost, allowing toll-free bridge crossing by car and paying back the full investment and cost for operation, after which the energy bridge can provide net income to for example a local community.

## Claims

1. Energy Bridge (1), comprising at least one buoyancy structure (3), preferably a plurality of buoyancy structures, and at least one windmill structure (4), preferably a plurality of windmill structures,
a road structure (2), wherein the road structure comprises a flat elongated horizontal surface of width of at least 2 m or 2,5 m and length equal to the length or longest dimension of the energy bridge, preferably without obstructions along the full length and width of the road structure,
one anchoring structure or connection in either end or corner of the energy bridge,
wherein
the road structure (2) is coupled directly to the buoyancy structure(s) or a truss structure coupled to the buoyancy structure(s), wherein the full weight of the road structure or the weight between said ends or between road structure element ends, is directly supported by the buoyancy structure(s) or truss structure coupled to the buoyancy structure(s),
wherein the windmill structure(s) are coupled directly to the buoyancy structure(s) or truss structure coupled to the buoyancy structure(s), wherein the full weight of the windmill structure(s) is supported by the buoyancy structure(s) or truss structure coupled to the buoyancy structure(s), and wherein the buoyancy structure(s), as seen along the energy bridge structure, has a U-like or J-like shape, with at least 80% of the volume of a horizontally oriented part of the buoyancy structure(s) below the waterline.

2. Energy Bridge according to claim 1, wherein the buoyancy structure(s) are U- or J-shaped as seen along the road structure, and arranged partly submerged under the road structure with the road structure coupled directly to at least one of the vertical legs or parts of said U- or J-shaped buoyancy structure(s), wherein
the full weight of the road structure is supported by at least one of said vertical legs or parts of said U- or J-shaped buoyancy structure(s); wherein windmill tower structures are coupled directly to the submerged horizontal part of the U- or J- shaped buoyancy structure(s), wherein the full weight of the windmill tower structures are supported by said submerged horizontal part of the U- or J-shaped buoyancy structure(s); and the road structure preferably support the windmill tower structures laterally above the waterline of the body of water where the energy bridge floats.

3. Energy Bridge according to claim 1, wherein the buoyancy structure(s) comprise longitudinal pontoons or pipe sections, such as riser sections cut into energy bridge element lengths and sealed and used as major buoyancy components, wherein at least two riser sections are included, one in either side of the energy bridge, with a truss structure or a grating arranged between and over the riser structures.

4. Energy Bridge according to claim 2, wherein the vertical parts of the U- or J-shaped buoyancy structure parts are the only parts of said buoyancy structure(s) extending above the waterline, thereby limiting a waterline area.

5. Energy Bridge according to claim 4 or 2, wherein the buoyancy elements are arranged along the energy bridge, one element every 50 - 250 m or 100-200 m, typically, and the submerged horizontal part of the buoyancy elements are arranged perpendicular to the road structure of the energy bridge.

6. Energy Bridge according to any one of claim 1 - 5, wherein the road structure is dimensioned for traffic by a vehicle, such as cars, buses, trucks and a "crawler", for infrastructure for communication and for maintenance and installation of the windmill structure(s) and parts thereof.

7. Energy Bridge according to claim 1, wherein the energy bridge is an energy island located offshore, being rectangular or quadratic, triangular, circular or polygonal as viewed from above, and anchored in at least one end or corner, preferably anchored at least in each corner or in at least three directions 120 ° apart, comprising road structure elements arranged side-by-side and/or around the energy island.

8. Energy Bridge according to claim 1 - 7, wherein the energy bridge is the whole crossing or a part of a crossing of a body of water for cars and utility vehicles.

9. Energy Bridge according to claim 1 - 8, wherein the anchoring structure or connection in the ends of the energy bridge is one or more of: a land structure, an anchoring structure extending down to a seabed, and a connection to a bridge allowing ships to cross under.

## Patentansprüche

1. Energiebrücke (1), umfassend mindestens eine Auftriebsstruktur (3), vorzugsweise eine Vielzahl von Auftriebsstrukturen, und mindestens einer Windradstruktur (4), vorzugsweise eine Vielzahl von Windradstrukturen,
eine Straßenstruktur (2), wobei die Straßenstruktur eine flache, längliche, horizontale Oberfläche mit einer Breite von mindestens 2 m oder 2,5 m und einer Länge gleich der Länge oder der längsten Abmessung der Energiebrücke umfasst, vorzugsweise ohne Hindernisse entlang der gesamten Länge und Breite der Straßenstruktur,
eine Verankerungsstruktur oder Verbindung an entweder einem Ende oder einer Ecke der Energiebrücke, wobei
die Straßenstruktur (2) direkt mit der/den Auftriebsstruktur(en) oder einer mit der/den Auftriebsstruktur(en) gekoppelten Fachwerkstruktur gekoppelt ist, wobei das gesamte Gewicht der Straßenstruktur oder das Gewicht zwischen den Enden oder zwischen den Straßenstrukturelementenden durch die Auftriebsstruktur(en) oder die mit der/den Auftriebsstruktur(en) gekoppelte Fachwerkstruktur direkt getragen wird,
wobei die Windradstruktur(en) mit der/den Auftriebsstruktur(en) oder der mit der/den Auftriebsstruktur(en) gekoppelten Fachwerkstruktur direkt gekoppelt sind, wobei das gesamte Gewicht der Windradstruktur(en) durch die Auftriebsstruktur(en) oder die mit der/den Auftriebsstruktur(en) gekoppelte Fachwerkstruktur getragen wird und
wobei die Auftriebsstruktur(en), entlang der Energiebrückenstruktur gesehen, eine U-artige oder J-artige Form aufweist, wobei mindestens 80 % des Volumens eines horizontal ausgerichteten Teils der Auftriebsstruktur(en) unterhalb der Wasserlinie liegen.

2. Energiebrücke nach Anspruch 1, wobei die Auftriebsstruktur(en) entlang der Straßenstruktur gesehen U- oder J-förmig sind und teilweise unter der Straßenstruktur versenkt angeordnet sind, wobei die Straßenstruktur direkt mit mindestens einem der vertikalen Schenkel oder Teile der U- oder J-förmigen Auftriebsstruktur(en) gekoppelt ist,
wobei das gesamte Gewicht der Straßenstruktur durch mindestens einen der vertikalen Schenkel oder Teile der U- oder J-förmigen Auftriebsstruktur(en) getragen wird; wobei Windradturmstrukturen direkt mit dem versenkten horizontalen Teil der U- oder J-förmigen Auftriebsstruktur(en) gekoppelt sind, wobei das gesamte Gewicht der Windradturmstrukturen durch den versenkten horizontalen Teil der U- oder J-förmigen Auftriebsstruktur(en) getragen wird; und die Straßenstruktur die Windradturmstrukturen vorzugsweise seitlich oberhalb der Wasserlinie des Gewässers trägt, auf dem die Energiebrücke schwimmt.

3. Energiebrücke nach Anspruch 1, wobei die Auftriebsstruktur(en) Längspontons oder Rohrabschnitte umfassen, wie Steigrohrabschnitte, die in Energiebrückenelementlängen geschnitten und abgedichtet sind und als Hauptauftriebskomponenten verwendet werden, wobei mindestens zwei Steigrohrabschnitte eingeschlossen sind, einer auf jeder Seite der Energiebrücke, wobei eine Fachwerkstruktur oder ein Gitter zwischen und über den Steigrohrstrukturen angeordnet ist.

4. Energiebrücke nach Anspruch 2, wobei die vertikalen Teile der U- oder J-förmigen Auftriebsstrukturteile die einzigen Teile der Auftriebsstruktur(en) sind, die sich oberhalb der Wasserlinie erstrecken, wobei dadurch ein Wasserlinienbereich begrenzt wird.

5. Energiebrücke nach Anspruch 4 oder 2, wobei die Auftriebselemente entlang der Energiebrücke angeordnet sind, in der Regel ein Element alle 50-250 m oder 100-200 m, und der versenkte horizontale Teil der Auftriebselemente senkrecht zu der Straßenstruktur der Energiebrücke angeordnet ist.

6. Energiebrücke nach einem der Ansprüche 1 bis 5, wobei die Straßenstruktur für einen Verkehr durch ein Fahrzeug, wie Autos, Busse, Lastwagen und ein "Raupenfahrzeug", für eine Infrastruktur, für eine Kommunikation und für eine Wartung und Installation der Windradstruktur(en) und Teilen davon bemessen ist.

7. Energiebrücke nach Anspruch 1, wobei die Energiebrücke eine küstennah gelegene Energieinsel ist, die von oben betrachtet rechteckig oder quadratisch, dreieckig, kreisförmig oder polygonal ist, und an mindestens einem Ende oder einer Ecke verankert ist, vorzugsweise mindestens an jeder Ecke oder in mindestens drei um 120° voneinander entfernten Richtungen verankert ist, umfassend Straßenstrukturelemente, die nebeneinander und/oder um die Energieinsel herum angeordnet sind.

8. Energiebrücke nach Anspruch 1 bis 7, wobei es sich bei der Energiebrücke um die gesamte Überquerung oder einen Teil einer Überquerung eines Gewässers für Autos und Nutzfahrzeuge handelt.

9. Energiebrücke nach Anspruch 1 bis 8, wobei es sich bei der Verankerungsstruktur oder Verbindung an den Enden der Energiebrücke um eine oder mehrere handelt von: einer Landstruktur, einer sich nach unten zu einem Meeresboden erstreckenden Verankerungsstruktur und einer Verbindung zu einer Brücke, die Schiffen eine Unterquerung ermöglicht.

## Revendications

1. Pont énergétique (1), comprenant au moins une structure de flottabilité (3), de préférence une pluralité de structures de flottabilité, et au moins une structure éolienne (4), de préférence une pluralité de structures éoliennes,
une structure routière (2), dans lequel la structure routière comprend une surface horizontale plate et allongée d'une largeur d'au moins 2 m ou 2,5 m et d'une longueur égale à la longueur ou à la dimension la plus longue du pont énergétique, de préférence sans obstructions sur toute la longueur et la largeur de la structure routière,
une structure d'ancrage ou liaison à l'une des extrémités ou à l'un des coins du pont énergétique, dans lequel
la structure routière (2) est accouplée directement à la ou aux structures de flottabilité ou à une structure en treillis accouplée à la ou aux structures de flottabilité, dans lequel le poids total de la structure routière ou le poids entre lesdites extrémités ou entre des extrémités d'éléments de structure routière est directement supporté par la ou les structures de flottabilité ou la structure en treillis accouplée à la ou aux structures de flottabilité,
dans lequel la ou les structures éoliennes sont accouplées directement à la ou aux structures de flottabilité ou à la structure en treillis accouplée à la ou aux structures de flottabilité, dans lequel le poids total de la ou des structures éoliennes est supporté par la ou les structures de flottabilité ou la structure en treillis accouplée à la ou aux structures de flottabilité, et
dans lequel la ou les structures de flottabilité, vues le long de la structure du pont énergétique, ont une forme en U ou en J, au moins 80 % du volume d'une partie orientée horizontalement de la ou des structures de flottabilité étant au-dessous du niveau de l'eau.

2. Pont énergétique selon la revendication 1, dans lequel la ou les structures de flottabilité sont en forme de U ou de J vues le long de la structure routière, et disposées en partie immergées sous la structure routière, la structure routière étant accouplée directement à au moins l'une des jambes ou parties verticales de ladite ou desdites structures de flottabilité en forme de U ou de J,
dans lequel le poids total de la structure routière est supporté par au moins l'une desdites jambes ou parties verticales de ladite ou desdites structures de flottabilité en forme de U ou de J ; dans lequel des structures de tours éoliennes sont accouplées directement à la partie horizontale immergée de la ou des structures de flottabilité en forme de U ou de J, dans lequel le poids total des structures de tours éoliennes est supporté par ladite partie horizontale immergée de la ou des structures de flottabilité en forme de U ou de J ; et la structure routière soutient de préférence les structures de tours d'éoliennes latéralement au-dessus du niveau de l'eau du plan d'eau où flotte le pont énergétique.

3. Pont énergétique selon la revendication 1, dans lequel la ou les structures de flottabilité comprennent des pontons ou sections de tuyaux longitudinaux, tels que des sections de colonnes montantes coupées en longueurs d'éléments de pont énergétique et scellées et utilisées en guise de composants principaux de flottabilité, dans lequel au moins deux sections de colonnes montantes sont incluses, une de chaque côté du pont énergétique, une structure en treillis ou un caillebotis étant disposé(e) entre les structures de colonnes montantes et au-dessus de celles-ci.

4. Pont énergétique selon la revendication 2, dans lequel les parties verticales des parties de structure de flottabilité en forme de U ou de J sont les seules parties de ladite ou desdites structures de flottabilité qui s'étendent au-dessus du niveau de l'eau, limitant de ce fait une aire du niveau de l'eau.

5. Pont énergétique selon la revendication 4 ou 2, dans lequel les éléments de flottabilité sont disposés le long du pont énergétique, à raison d'un élément tous les 50 à 250 m ou 100 à 200 m, typiquement, et la partie horizontale submergée des éléments de flottabilité est disposée perpendiculairement à la structure routière du pont énergétique.

6. Pont énergétique selon l'une quelconque des revendications 1 à 5, dans lequel la structure routière est dimensionnée pour la circulation d'un véhicule, tel que des voitures, des bus, des camions et un engin à chenilles, pour l'infrastructure de communication et pour l'entretien et l'installation de la ou des structures éoliennes et de parties de celles-ci.

7. Pont énergétique selon la revendication 1, dans lequel le pont énergétique est une île énergétique située au large, de forme rectangulaire ou quadratique, triangulaire, circulaire ou polygonale vue du dessus, et ancrée dans au moins une extrémité ou un coin, de préférence ancrée au moins dans chaque coin ou dans au moins trois directions distantes de 120°, comprenant des éléments de structure routière disposés côte à côte et/ou autour de l'île énergétique.

8. Pont énergétique selon les revendications 1 à 7, dans lequel le pont énergétique est la traversée complète ou partielle d'un plan d'eau pour des voitures et des véhicules utilitaires.

9. Pont énergétique selon les revendications 1 à 8, dans lequel la structure d'ancrage ou la liaison dans les extrémités du pont énergétique est une ou plusieurs parmi : une structure terrestre, une structure d'ancrage s'étendant jusqu'au fond marin, et une liaison à un pont permettant aux navires de passer dessous.
